Europäisches Patentamt

European Patent Office

Office européen des brevets

(19)

(11) Veröffentlichungsnummer: **0 052 771**

A1

(12) **EUROPÄISCHE PATENTANMELDUNG**

(21) Anmeldenummer: 81108779.0

(22) Anmeldetag: 23.10.81

(51) Int. Cl.³: **G 07 G 1/02**
**G 01 G 19/413**

(30) Priorität: 25.11.80 DE 3044394

(43) Veröffentlichungstag der Anmeldung:
02.06.82 Patentblatt 82/22

(84) Benannte Vertragsstaaten:
AT BE CH DE FR GB IT LI NL SE

(71) Anmelder: Bizerba-Werke Wilhelm Kraut GmbH & Co.
KG.
Wilhelm-Kraut-Strasse 41
D-7460 Balingen 1(DE)

(72) Erfinder: Kuhnle, Ernst, Dipl.-Ing.
Hermann-Rommel-Strasse 28
D-7460 Balingen 1(DE)

(72) Erfinder: Berg, Walter
Händelstrasse 20
D-7460 Balingen 1(DE)

(72) Erfinder: Schacke, Walter
Lisztstrasse 44
D-7460 Balingen 1(DE)

(74) Vertreter: Hoeger, Stellrecht & Partner
Uhlandstrasse 14c
D-7000 Stuttgart 1(DE)

(54) Wäge- und Kassiervorrichtung.

(57) Die Erfindung bezieht sich auf eine Wäge- und Kassiervorrichtung. Um eine solche Vorrichtung rationeller sowie funktions- und diebstahlsicherer zu machen, ist vorgesehen, daß die Tastatur 4 einer Waage L eine zusätzliche Funktionstaste K umfaßt, mittels welcher eine Kundennummer in einen Zentralspeicher 14 übertragbar ist, daß die übertragene Kundennummer im Zentralspeicher 14 die Eröffnung eines Kundenkontos auslöst, unter welcher die Verkaufssumme der kundenbezogenen, an einer oder mehreren Ladenwaagen L durchgeführten Wägevorgänge speicherbar ist, und daß die im Zentralspeicher 14 aus den kundenbezogenen, an den einzelnen Ladenwaagen L angefallenen Verkaufssummen gebildete Gesamtsumme von der Ladenkasse 17, 18 oder einer beigestellten Anzeigeeinheit mittels der Kundennummer aus dem Zentralspeicher 14 abrufbar ist.

Fig. 3

EP 0 052 771 A1

# HOEGER, STELLRECHT & PARTNER 0052771

P A T E N T A N W Ä L T E

UHLANDSTRASSE 14 c · D 7000 STUTTGART 1

A 44 262 m
m - 192
21. Juli 198o

Anmelder: Bizerba-Werke
Wilhelm Kraut KG
Wilhelm-Kraut-Straße 41
7460 Balingen 1

— 1 —

B e s c h r e i b u n g :

Wäge- und Kassiervorrichtung

Die Erfindung betrifft eine Wäge- und Kassiervorrichtung
mit einem Zentralspeicher, mit mehreren, an diesen angeschlossenen, elektromechanischen Ladenwaagen mit elektronischer Preisberechnungseinrichtung und Druckwerk zur Erstellung eines Bons und mit wenigstens einer, ebenfalls an
den Zentralspeicher angeschlossenen Ladenkasse, wobei über
eine Tastatur jeder Waage Zahlenwerte in die Preisberechnungseinrichtung der Waage eingebbar sind, das Druckwerk jeder
Waage einen mehrere an der Waage vorgenommene Wägevorgänge
darstellenden Bon mit Aufaddierung der Einzelposten liefert
und die Tastatur zusätzliche Funktionstasten zum Aufsummieren,
zum Auslösen des Druckwerks und dergleichen aufweist.

Bei bekannten Wäge- und Kassiersystemen dieser Art werden
die auf die Gewichtseinheit bezogenen Grundpreise, also
beispielsweise kg-Preise bestimmter Waren, beispielsweise
Wurst, Käse, Obst oder anderer Lebensmittel an der Waage,
an welcher der betreffende Verkaufsvorgang stattfindet,
aus dem Zentralspeicher abgerufen. Hierzu wird beispielsweise eine warenbezogene Nummer in die Tastatur der Ladenwaage eingegeben, worauf dann automatisch von der Preisberechnungseinrichtung dieser Waage der gewichtsabhängige

A 44 262 m
m - 193
21.Juli 1980                    -2-

Verkaufspreis errechnet und angezeigt wird. Nach Abschluß
des oder mehrerer Verkaufsvorgänge an ein und derselben
Waage kann schließlich deren Druckwerk betätigt werden,
worauf ein Bon ausgegeben wird, auf dem sämtliche gekauften
Waren, deren Einzelpreis sowie der aufaddierte Gesamtpreis
angegeben sind. Die an der betreffenden Ladenwaage gekauften
Waren werden von der Verkäuferin in eine Tüte gegeben, die
unter gleichzeitiger Anheftung des Bons mit einer Heftklammer oder dergleichen verschlossen wird. Nunmehr begibt
sich der Kunde zu einer weiteren, ebenfalls mit einer
Ladenwaage ausgerüsteten Verkaufsstelle, um dort andere
Waren einzukaufen, wobei sich der beschriebene Vorgang
erneut abspielt. Nach Erledigung aller Käufe begibt sich der
Kunde schließlich mit einer größeren Anzahl von Tüten, die
jeweils die gekauften Waren enthalten und mit dem betreffenden
Bon versehen sind, zur Ladenkasse, wo die Kassiererin die
einzelnen Tüten in die Hand nimmt, den auf jedem Bon verzeichneten Gesamtpreis mittels einer Tastatur in die Kasse
eingibt und von dieser schließlich die vom Kunden zu bezahlende Summe ausrechnen läßt.

Das beschriebene System hat zwei Mängel:

Es ist nicht diebstahlsicher, weil der Kunde, wenn er will,
eine Tüte mit gekauften Waren unbemerkt an der Kasse vorbeibringen kann. Weiterhin erfordert das Eintippen zahlreicher Preise in die Ladenkasse viel Zeit, die von der
Kassiererin zur Durchführung anderer Arbeiten besser
genutzt werden könnte, ganz abgesehen davon, daß beim
Eintippen der Preise in die Ladenkasse Fehler auftreten
können.

A 44 262 m
m - 192
21. Juli 1980

Es ist Aufgabe der Erfindung, eine gattungsgemäße Wäge- und
Kassiervorrichtung rationeller sowie funktions- und diebstahlsicherer zu machen.

Zur Lösung dieser Aufgabe wird erfindungsgemäß vorgesehen,
daß die Tastatur jeder Waage eine zusätzliche Funktionstaste
umfaßt, mittels welcher eine durch die Tastatur eingebbare,
auf die für einen bestimmten Kunden durchzuführenden Wägevorgänge bezogene Kundennummer in den Zentralspeicher übertragbar ist, daß die übertragene Kundennummer im Zentralspeicher die Eröffnung eines Kundenkontos auslöst, unter
welcher die Verkaufssumme der kundenbezogenen, an einer oder
mehreren Ladenwaagen durchgeführten Wägevorgänge speicherbar
ist, und daß die im Zentralspeicher aus den kundenbezogenen,
an den einzelnen Ladenwaagen angefallenen Verkaufssummen
gebildete Gesamtsumme von der Ladenkasse oder einer beigestellten Anzeigeeinheit mittels der Kundennummer aus dem
Zentralspeicher abrufbar ist.

Die nachstehende Beschreibung einer bevorzugten Ausführungsform der Erfindung dient im Zusammenhang mit beiliegender
Zeichnung der weiteren Erläuterung. Es zeigen:

Fig. 1          eine für die erfindungsgemäße Wäge- und
                Kassieranlage geeignete Ladenwaage in
                Vorderansicht;

Fig. 2          die Waage aus Fig. 1 in Rückansicht und

Fig. 3          schematisch die erfindungsgemäße Wäge- und
                Kassieranlage mit einem Zentralspeicher und
                mehreren Ladenwaagen sowie Ladenkassen.

A 44 262 m
m - 192
21. Juli 1980

Die Erfindung beruht auf folgender Grundidee:

Jedem Kunden wird bei Beginn seines Verkaufsweges durch
ein Ladengeschäft, welches mehrere Wägeplätze mit Ladenwaagen aufweist, eine Kundennummer zugeteilt. Diese Kundennummer kann beispielsweise die deutlich sichtbare Nummer
eines vom Kunden mitgeführten Einkaufswagens sein, wie sie
heute beispielsweise in größeren Lebensmittelmärkten üblich
sind. Wenn der Kunde an einer ersten Ladenkasse Einkäufe
tätigt, spielen sich die oben beschriebenen Vorgänge ab.
Erfindungsgemäß wird jedoch vor Durchführung des ersten
Wägevorganges in die betreffende Ladenwaage die Kundennummer
eingegeben. Hierzu weist die Tastatur eine besondere Funktionstaste auf, nach deren Betätigung die Kundennummer mittels der
üblichen Tastatur der Waage an derselben zur Anzeige gebracht
und in den Zentralspeicher übertragen werden kann. Die Übertragung der Kundennummer löst im Zentralspeicher die Eröffnung
eines mit dieser Nummer bezeichneten Kundenkontos aus. Alle
an der betreffenden Ladenwaage durchgeführten Verkaufsvorgänge
werden bezüglich der Verkaufspreise der einzelnen Waren im
Kundenkonto sowie im übrigen in Warenspeichern registriert.
Insbesondere wird der an der betreffenden Ladenwaage entstandene, auch auf dem Bon erscheinende Summen- oder Endpreis
für alle dort von einem Kunden gekauften Waren in dem Konto
des betreffenden Kunden gespeichert. Nunmehr begibt sich der
Kunde zu einer zweiten Ladenwaage, wo wiederum zuerst seine
Kundennummer dem Zentralspeicher mitgeteilt wird. Anschließend
werden auch die an dieser zweiten Waage getätigten Verkäufe
wiederum z. B. hinsichtlich der Einzel- und/oder Gesamtverkaufspreise in dem betreffenden Kundenkonto gespeichert und
auch dem Warenspeicher zwecks Ergänzung mitgeteilt. Diese
Verkaufs- und Speichervorgänge können sich nun noch an
mehreren Ladenwaagen wiederholen.

A 44 262 m
m - 192
21. Juli 1980

Schließlich trifft der Kunde mit einer Reihe von die
gekauften Waren enthaltenden und mit den entsprechenden
Bons versehenen Tüten an der Ladenkasse ein. Mittels der
beispielsweise vom Einkaufswagen abgelesenen Kundennummer
ruft nun die Kassiererin die im Zentralspeicher unter dieser
Kundennummer gespeicherten Werte ab. Somit erscheinen an
einer Anzeigeeinheit neben der Kundennummer der Gesamtkaufpreis der von dem Kunden gekauften Waren, die Anzahl der
gekauften Tüten und die Kennzeichen (beispielsweise ebenfalls
Nummern) der vom Kunden besuchten Ladenwaagen. Die Kassiererin
braucht nun lediglich den vom Zentralspeicher bereits vorberechneten und an der Ladenkasse angezeigten Gesamtkaufpreis
von Hand in die Kasse einzugeben. Weiterhin kann sie sich
durch Überprüfen der vom Kunden mitgeführten Tüten überzeugen, ob die Kundennummer auf den einzelnen, mit den Tüten
verhefteten Bons mit der beispielsweise am Einkaufswagen
ablesbaren Kundennummer übereinstimmt.

Die Kassiererin braucht also nur noch den vom Zentralspeicher bereits vorausberechneten und an einem Bildschirm
oder dergleichen angezeigten Gesamtkaufpreis in die Ladenkasse einzugeben, wodurch Zeit gespart wird und Fehlermöglichkeiten ausgeschaltet sind. Schließlich muß der Kunde
alle ebenfalls vom Zentralspeicher erfaßten und an der
Ladenkasse angezeigten Tüten bezahlen. Der Kunde kann also
nicht mehr eine bei einem Verkaufsvorgang an einer bestimmten
Ladenwaage erhaltene, mit Bon versehene Tüte unbemerkt an
der Kasse vorbeischmuggeln, wodurch Ladendiebstähle verhindert sind.

A 44 262 m
m - 192
21. Juli 1980

Kernpunkt der Erfindung ist also, eine Wäge- und Kassiervorrichtung technisch so auszubilden, daß alle von einem
Kunden getätigten Einkäufe unter einer diesem Kunden zugeordneten Kundennummer erfaßt, gespeichert und bearbeitet
werden.

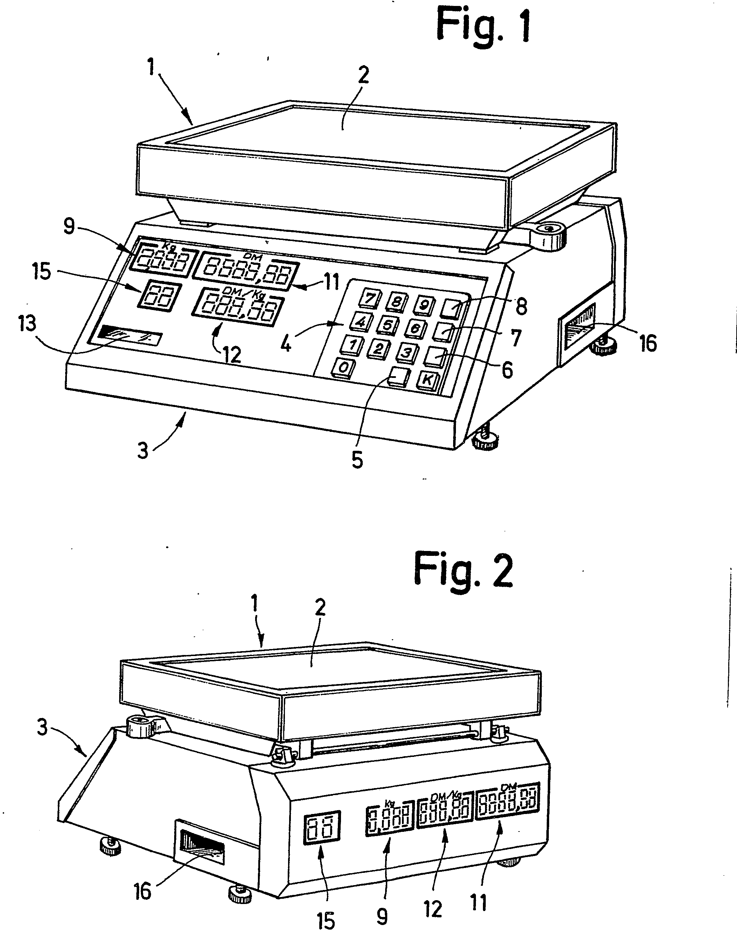

In Fig. 1 und 2 ist eine Ladenwaage zur Verwendung in einem
erfindungsgemäßen Wäge- und Kassiersystem dargestellt. Die
Waage umfaßt einen flachen Wägeteil 1 mit Wägeplatte 2 und
eine Anzeigeeinheit 3 (Arbeitsteil). Der Wägeteil 1 ist eine
elektromechanische Waage mit Meßwertgebern, beispielsweise
in Gestalt von Biegestäben mit Dehnungsmeßstreifen. Der
Wägeteil 1 ist mit der Anzeigeeinheit 3 elektrisch verbunden.
Die vom Wägeteil 1 gelieferten Meßwerte werden von der in
der Anzeigeeinheit 3 befindlichen Elektronik verarbeitet.
Die Anzeigeeinheit 3 weist in herkömmlicher Weise eine
Zehnertastatur 4 zum Eingeben von Zahlenwerten auf. Die
Tastatur 4 umfaßt weiterhin mehrere Funktionstasten 5, 6, 7,
8 zum Aufsummieren einzelner Zahlen, zum Auslösen eines
Druckwerks und dergleichen. Die Anzeigeeinheit 3 hat ferner
verschiedene Fenster, nämlich ein Fenster 9 zur Anzeige des
Gewichts der auf der Wägeplatte 2 gewogenen Ware, ein
Fenster 11 zur Anzeige des Preises der gewogenen Ware und
ein Fenster 12 zur Anzeige des Grundpreises. Die Fenster 9,
11, 12 sind - vgl. Fig. 2 - sowohl an der Vorder- als auch
an der Rückseite der Anzeigeeinheit 3 vorgesehen, so daß sie
sowohl von einer Verkäuferin als auch von einem Kunden beobachtet werden können. Die Anzeigeeinheit 3 enthält ferner
ein übliches und daher nicht dargestelltes Druckwerk zur
Erstellung eines Bons, auf dem insbesondere die Kundennummer,
die gekaufte Ware, Einzelpreise und Gesamtpreis aufgedruckt

A 44 262 m
m - 192
21. Juli 1980

sind. Die Anzeigeeinheit 3 hat einen Austrittsschlitz 13,
aus dem die bedruckten Bons austreten.

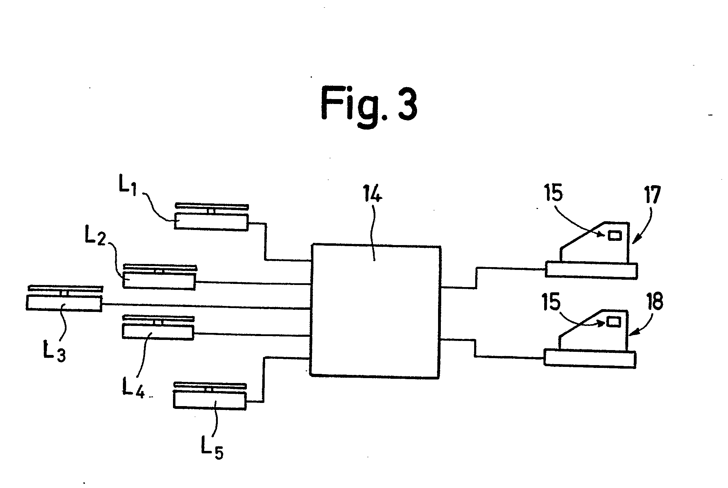

Wie dargestellt, umfaßt die Tastatur 4 der Waage eine
zusätzliche Funktionstaste K. Nach Betätigung dieser Taste K
kann die Kundennummer über die Tastatur 4 in den Zentralspeicher 14 (Fig. 3) eingespeichert und dort unter dieser
Nummer das Kundenkonto eröffnet werden. An Vorder- und
Rückseite der Ladenwaage - vgl. Fig. 1 und 2 - ist ferner
jeweils ein zusätzliches Fenster 15 vorgesehen, in dem die
eingegebene und dem Zentralspeicher 14 mitgeteilte Kundennummer solange erscheint, bis der gesamte Verkaufsvorgang
mit der Summenbildung abgeschlossen ist.

Die einzelnen Ladenwaagen gemäß Fig. 1 und 2, die in Fig. 3
mit $L_1, \ldots, L_5$ bezeichnet sind, sind über elektrische, in
Fig. 3 nur schematisch angedeutete Mehrfachleitungen mit
dem Zentralspeicher 14 verbunden. In Fig. 1 und 2 ist eine
Öffnung 16 zum Einführen eines entsprechenden Kabelsteckers
in die Ladenwaage sichtbar. Andererseits sind, wie sich aus
Fig. 3 ergibt, an den Zentralspeicher 14 zwei Ladenkassen
17, 18 angeschlossen. Diese Ladenkassen enthalten ein Anzeigefeld oder sind mit einer beigestellten Anzeigeeinheit
mit Bildschirm verbunden, so daß in der zuvor beschriebenen
Weise die unter der betreffenden Kundennummer im Zentralspeicher gespeicherten Informationen an den Kassen sichtbar
gemacht werden können. Auch die Ladenkassen 17, 18 haben
jeweils ein Fenster 15, so daß dort (oder auf dem beigestellten Bildschirm) die Kundennummer zur Kontrolle zur
Anzeige gebracht werden kann, nachdem durch (nicht dargestellte) Funktionstasten an der Kasse diese Nummer und die
ihr zugeordneten Informationen aus dem Zentralspeicher 14
abgerufen sind.

A 44 262 m
m - 192
21. Juli 1980

Die beschriebene Wäge- und Kassieranlage besitzt weitere
Möglichkeiten: Gleichzeitig mit der "Führung eines Kundenkontos" im Zentralspeicher 14 werden bei jedem Verkaufsvorgang in diesem Speicher die Warenverkaufspreise bezogen
auf die jeweilige Ware gespeichert. Damit kann ein Streifendrucker in der Reihenfolge der den jeweiligen Waren zugeordneten Nummern die Tagessummen für die einzelnen Waren
aufstellen. Diese Tagessumme kann den Kaufpreis und das
Gewicht bezogen auf die jeweilige Ware enthalten, sowie
die Anzahl der Verkäufe pro Ware, den Warenumsatzteil
an der Tagessumme usw. Eine oder mehrere dieser Informationsgrößen können zusätzlich auch graphisch dargestellt werden.

Mit den anhand von Fig. 1 und 2 beschriebenen Ladenwaagen
kann ohne Verwendung des Zentralspeichers 14 im übrigen
selbstverständlich auch im herkömmlichen Normalbetrieb
gearbeitet werden, wenn sie z. B. durch einen (nicht dargestellten) Schlüsselschalter umgeschaltet werden.

Die beschriebene Wäge- und Kassiervorrichtung hat also
wie herkömmliche Anlagen dieser Art den Vorzug einer warenbezogenen Datenkonzentrierung im Zentralspeicher 14 sowie
die Möglichkeit, Grundpreise (und natürlich auch Festpreise
für nicht nach Gewicht verkaufte Waren) im sogenannten
"Price-look up"-Verfahren aus dem Zentralspeicher 14 zu
den einzelnen Ladenkassen hin abzurufen. Daneben aber
zeichnet sich die erfindungsgemäße Vorrichtung durch eine
kundenbezogene Datenkonzentrierung an den Ladenkassen sowie
eine optimale Diebstahlsicherung aus.

A 44 262 m
m - 192
21. Juli 1980

Anmelder: Bizerba-Werke
Wilhelm Kraut KG
Wilhelm-Kraut-Straße 41
7460 Balingen 1

— 1 —

Patentansprüche:

1. Wäge- und Kassiervorrichtung mit einem Zentralspeicher,
mit mehreren, an diesen angeschlossenen, elektromechanischen
Ladenwaagen mit elektronischer Preisberechnungseinrichtung
und Druckwerk zum Erstellen eines Bons und mit wenigstens
einer, ebenfalls an den Zentralspeicher angeschlossenen
Ladenkasse, wobei über eine Tastatur jeder Waage Zahlenwerte in die Preisberechnungseinrichtung der Waage eingebbar sind, das Druckwerk jeder Waage einen mehrere, an
der Waage vorgenommene Wägevorgänge darstellenden Bon mit
Aufaddierung der Einzelposten liefert und die Tastatur
zusätzliche Funktionstasten zum Aufsummieren, zum Auslösen des Druckwerks und dergleichen aufweist, d a -
d u r c h   g e k e n n z e i c h n e t , daß die
Tastatur (4) eine zusätzliche Funktionstaste (K) umfaßt,
mittels welcher eine durch die Tastatur eingebbare, auf
die für einen bestimmten Kunden durchzuführenden Wägevorgänge bezogene Kundennummer in den Zentralspeicher (14)
übertragbar ist, daß die übertragene Kundennummer im
Zentralspeicher (14) die Eröffnung eines Kundenkontos
auslöst, unter welcher die Verkaufssumme der kundenbezogenen, an einer oder mehreren Ladenwaagen (L) durchgeführten Wägevorgänge speicherbar ist, und daß die im
Zentralspeicher (14) aus den kundenbezogenen, an den
einzelnen Ladenwaagen (L) angefallenen Verkaufssummen

A 44 262 m
m - 192
21. Juli 1980

gebildete Gesamtsumme von der Ladenkasse (17,18) oder
einer beigestellten Anzeigeeinheit mittels der Kundennummer aus dem Zentralspeicher (14) abrufbar ist.

2. Vorrichtung nach Anspruch 1, dadurch gekennzeichnet, daß
an den Ladenwaagen (L) und/oder Ladenkassen (17,18)
jeweils ein Fenster (15) zur Anzeige der Kundennummer
vorgesehen ist.

Fig. 1

Fig. 2

# Fig. 3

0052771

Europäisches
Patentamt

**EUROPÄISCHER RECHERCHENBERICHT**

Nummer der Anmeldung

EP 81 10 8779

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 2 027 912 (DATA SCALES) <br><br> * Zusammenfassung; Abbildungen; Ansprüche; Seite 2, Zeilen 14 bis 20; Seite 2, Zeile 98 bis Seite 3, Zeile 34 * <br><br> -- | 1 | G 07 G 1 /02 <br> G 01 G 19/413 |
| P,X | DE - A - 3 003 255 (ESPERA-WERKE) <br><br> * das ganze Dokument * <br><br> -- | 1 | |
| A | US - A - 3 716 697 (S.M.WEIR) <br><br> * Zusammenfassung, Abbildung 1 * <br><br> -- | 1 | **RECHERCHIERTE SACHGEBIETE (Int. Cl.³)** <br><br> G 07 G 1/00 <br> 1/02 <br> G 06 F 15/22 <br> 15/24 <br> G 01 G 19/413 |
| A | GB - A - 2 035 647 (A.W.FRY) <br><br> * Zusammenfassung; Abbildungen * <br><br> --------- | 1 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 05-03-1982 | DAVID |

EPA form 1503.1 06.78